# EUROPÄISCHE PATENTSCHRIFT

(11) **EP 0 549 629 B1**
(45) Veröffentlichungstag und Bekanntmachung des Hinweises auf die Patenterteilung: **13.12.1995**
(21) Anmeldenummer: 91915908.7
(22) Anmeldetag: 17.09.1991
(51) Int. Cl.: G21C 3/33

(54) **BRENNELEMENT MIT GESICHERTEN STABENDEN AM FUSS**
FUEL ELEMENT WITH SECURED ROD ENDS AT THE FOOT
ELEMENT COMBUSTIBLE A EXTREMITE DE BARREAU BLOQUEE A LA BASE

(30) Priorität: 18.09.1990 DE 4029539
(43) Veröffentlichungstag der Anmeldung: 07.07.1993
(73) Patentinhaber: SIEMENS AKTIENGESELLSCHAFT, 80333 München (DE)
(72) Erfinder: LIPPERT, Hans-Joachim, D-8552 Höchstadt (DE); MEIER, Werner, D-8551 Kunreuth (DE)
(86) Internationale Anmeldenummer: DE9100734
(87) Internationale Veröffentlichungsnummer: WO9205565

(56) Entgegenhaltungen:
- EP-A- 0 073 728
- EP-A- 0 224 728
- DE-A- 3 533 317
- FR-A- 2 240 502
- US-A- 4 452 755
- US-A- 4 675 154

## Beschreibung

Die Erfindung betrifft ein Brennelement mit einem Stabbündel, das zueinander parallele Brennstäbe und andere Stäbe wie z.B. Kühlmittelrohre bei Siedewasserreaktoren oder Führungsrohre bei Druckwasserreaktoren enthält, wobei das Bündel oben von einer Deckplatte mit Kühlmittelauslässen und unten von einer Bodenplatte mit Kühlmitteleinlässen abgedeckt ist. Brennelemente für Druckwasserreaktoren enthalten ein stabiles Skelett, das von einem Fußteil mit einem "Stabhalter" (Bodenplatte), daran befestigten Führungsrohren und an diesen Rohren befestigten Abstandhaltern sowie einen nach Einsetzen der Brennstäbe aufgesetzten und befestigten Deckplatte besteht. Als stabile und sichere Befestigungen der Rohre an der Bodenplatte werden Verschraubungen angesehen. Derartige Schraubungen können sich während des Betriebes aber festfressen, vor allem wenn Rohre und Fußteil aus unterschiedlichen Materialien gefertigt sind. Andererseits sind die Verschraubungen wegen der Toleranzen oder ungleichmäßiger Beanspruchung unterschiedlich belastet und es muß vermieden werden, daß sich Muttern oder andere Verschraubungsteile selbsttätig lösen und im Reaktor verloren gehen. Daher sind entsprechende, gesicherte Verbindungen relativ aufwendig ausgeführt, wobei auf eine Lösbarkeit für Inspektions- und Reparaturzwecke häufig verzichtet wird.

Brennelemente für Siedewasserreaktoren enthalten ein ähnliches Skelett, wobei aber statt der Führungsrohre bestimmte, als Haltestäbe ausgebildete Brennstäbe vorgesehen sind. Daher liegen bei deren Befestigungen die gleichen Probleme vor, wobei hier jedoch für Inspektions- und Reparaturzwecke eine Zerlegung des Skelettes erforderlich ist. Meist tragen auch die nicht als Tragstäbe verwendeten Brennstäbe untere Verschlußkappen, die an der Bodenplatte verschraubt sind, wobei lediglich deren obere Enden so gestaltet sind, daß sie sich relativ zur Deckplatte verschieben können, wenn sich während des Betriebs die Länge der Brennstäbe ändert. Daneben enthalten Siedewasser-Brennelemente einen das Stabbündel seitlich umgebenden Kasten, der oben und unten offen ist, wobei diese Öffnungen bei eingesetztem Skelett durch dessen Platten abgedeckt sind. Da das Kühlmittel gleichzeitig als Moderator benötigt wird, aber im oberen Teil des Brennelementes an den Brennstäben weitgehend verdampft, hat es sich als vorteilhaft erwiesen, im Brennstabbündel auch Wasserstäbe oder Wasserrohre anzuordnen, die nur von flüssigem Kühlmittel durchströmt werden. Ein solches Brennelement ist in der US-A-4,675,154 beschrieben, wobei ein Teil der Brennstäbe als Haltestäbe an den beiden Platten verschraubt ist, während einige Brennstäbe kürzer sind und nur an der Bodenplatte verschraubt sind. Ein zentrales Wasserrohr ist über eine Feder an der Deckplatte abgestützt und ist mit einem Sechskant-Stift in einer entsprechenden Ausnehmung der Bodenplatte lose geführt. Das Wasserrohr trägt die Abstandhalter, während das Skelett des Brennelementes die Tragstäbe benötigt, deren Verschraubungen die angegebenen Probleme aufweisen.

Der Erfindung liegt die Aufgabe zugrunde, ein Brennelement mit besonders einfachen Verbindungen zwischen den unteren Endstücken der Stäbe oder Rohre und der Bodenplatte anzugeben.

Die Erfindung sieht hierzu vor, daß die Bodenplatte und wenigstens das Endstück eines Stabes jeweils ein Verbindungsteil mit aneinander angepaßten, eine lösbare Verbindung des Endstücks mit der Bodenplatte bildenden Profilen aufweisen, wobei das Endstück von oben in die Verbindung eingesetzt und/ oder eingedreht werden kann und ein Bolzen vorgesehen ist, der ein Abheben des Stabes von der Bodenplatte verhindert.

Ein derartiges Abheben kann durch das mit hoher Geschwindigkeit durch die Bodenplatte eintretende, an den Stäben entlangströmende Kühlmittel hervorgerufen werden.

Insbesondere sieht die Erfindung vor,bei Druckwasser-Brennelementen erprobte Konstruktionsprinzipien auch auf Siedewasser-Brennelemente anzuwenden, wobei dann ein Kühlmittelrohr die Funktion der Führungsrohre als Bestandteil des Brennelementskeletts übernimmt. Dadurch entfallen weitere Tragestäbe und alle Brennstäbe sind von Tragkräften entlastet. Dann muß allerdings das Kühlmittelrohr besonders gesichert an der Bodenplatte befestigt sein, wobei durch die Befestigung von Deckplatte und Bodenplatte am Kühlmittelrohr der Abstand dieser beiden Platten vorgegeben und ein Verdrehen der Bodenplatte verhindert werden muß.

Für diesen Fall ist das untere Endstück des Kühlmittelrohres und die Bodenplatte jeweils mit mindestens einem Verbindungsteil versehen, wobei die Verbindungsteile aneinander angepaßte, eine lösbare Verbindung bildende Profile aufweisen und durch einen in beide Verbindungsteile eingreifenden Sicherungsbolzen gegeneinander verriegelt sind.

Für die Halterung von Brennstäben an der Bodenplatte ist insbesondere ein Bajonettverschluß vorgesehen, der von den Verbindungsteilen dadurch gebildet wird, daß der Bolzen an einem der Verbindungsteile angeformt ist. Dieser Bajonettverschluß ist vor allem dann vorgesehen, wenn ein Siedewasser-Brennelement zwar eine Gruppe von Brennstäben enthält, die so lang sind, daß sie zwischen der Bodenplatte und der Deckplatte in axialer Richtung nur geringfügig verschiebbar sind, wenn aber aus Gründen der Neutronenökonomie und eines im oberen Teil des Brennelementes verbesserten Verhältnisses von Moderator und Kernbrennstoff eine an kürzeren Brennstäben vorgesehen ist, die dann an der Bodenplatte gehaltert werden sollen. Dafür ist ein derartiger Bajonettverschluß besonders geeignet, da er leicht lösbar ist.

Vorteilhafte Weiterbildungen der Erfindung sind in den Unteransprüchen gekennzeichnet und anhand von mehreren Ausführungsbeispielen und 39 Figuren näher erläutert.

Es zeigen:
- Figur 1: eine prinzipielle Darstellung der wichtigsten Teile eines Brennelementes für Siedewasser-Reaktoren,
- Figur 2: das untere Ende des Brennelementes, teils im Querschnitt, teils in einer Seitenansicht mit weggebrochener Wand des Fußteiles,
- Figur 3: einen Querschnitt einer Dichtfeder,
- Figur 4 und 5: eine gesicherte Steckverbindung zwischen dem Endstück eines Kühlmittelrohres und der Bodenplatte ("Stabhalter") in Längsschnitt und Querschnitt,
- Figur 6: einen Querschnitt durch eine andere Steckverbindung,
- Figur 7 und 8: Längsschnitte durch gesicherte Schraubverbindungen zwischen dem Endstück und der Bodenplatte,
- Figur 9 und 10: eine besonders vorteilhafte gesicherte Schraubverbindung zwischen dem Kühlmittelrohr und dem Fußteil in Längs- und Querschnitt der einen Sicherungsbolzen tragenden Teile,
- Figur 11: das Prinzip eines Bajonett-Verschlusses zwischen der Endkappe eines Brennstabes und der Bodenplatte,
- Figur 12: einen Längsschnitt durch einen besonders vorteilhaften Bajonettverschluß,
- Figur 13 und 14: einen Längsschnitt und einen Aufsicht eines Brennelementes,
- Figur 15: einen Querschnitt durch einen oberen Abstandhalter,
- Figur 16: einen Querschnitt durch einen Brennelementkasten, und
- Figur 17: eine Seitenansicht eines kürzeren Brennstabes und seiner Halterung im Brennelement.

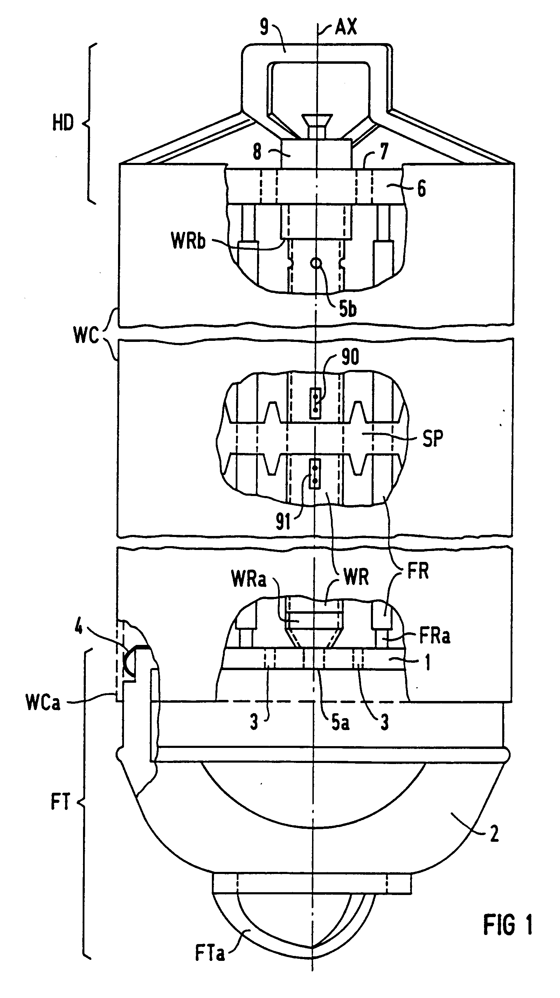

FIG 1 zeigt zunächst ein nichtmaßstabgetreues Schema für ein fertigmontiertes Brennelement, dessen Längsachse mit AX bezeichnet ist.

Das Brennelement ist seitlich umgeben von einem Brennelementkasten WC, der oben und unten offen ist. Dort befinden sich der Brennelemente-Kopf HD und das Brennelement-Fußteil FT. Das Fußteil FT ist mittels eines Bügels FTa an einem Basisgitter im Kern eines Reaktors positioniert. Ein Übergangsstück 2 bildet einen Strömungskanal, der von einer Eintrittsöffnung 3a zu Kühlmitteleinlässen 3 in einer Bodenplatte 1 führt, die das Fußteil bzw. das untere Ende des Brennelementes abdeckt. Der untere Rand WCa des Brennelement-Kastens WC ist gegen das Fußteil FT und dessen Bodenplatte 1 mittels einer Dichtfeder 4 abgestützt und weitgehend gedichtet.

In axialer Richtung erstreckt sich ein Kühlmittelrohr ("Wasserrohr" WR) durch das Innere, vorzugsweise das Zentrum des Kastens WC. Es trägt jeweils am unteren und oberen Ende ein Endstück WRa und WRb sowie Öffnungen 5a, 5b zum Durchtritt von Kühlmittel (Wasser).

Zwischen Abschlagkörpern 90, 91 sind am Kühlmittelrohr in vorgegebenen, axialen Positionen Abstandhalter ("Spacer" SP) angebracht, die senkrecht zum Rohr WR stehen und Stützstege enthalten. Diese Stützstege bilden ein Gitter mit Maschen, das z.B. aus miteinander verschweißten Hülsen oder aus einander senkrecht durchsetzenden Längsstegen und Querstegen gebildet sein kann. An diesen Stegen sind eine Vielzahl von Brennstäben FR abgestützt, die jeweils zum Kasten parallel sind, die Maschen mehrere Abstandhalter durchsetzen und unten und oben Verschlußkappen FRa, FRb tragen.

Der Brennelement-Kopf HD besitzt eine Deckplatte 6, die den Brennelement-Kasten WC oben abdeckt und Kühlmittel-Auslässe 7 aufweist. An der Oberseite der Deckplatte ist ein Griff 9 angeordnet, wobei Deckplatte 6, Griff 9 und oberes Endstück WRb des Kühlmittelrohres über ein als Anschlagkörper ausgebildetes Verbindungsteil 8 aneinander gehalten sind.

Die Brennstäbe FR sind dabei im wesentlichen in den Maschen der Abstandhalter festgeklemmt, die Bodenplatte 1 und Deckplatte 6 dienen nur als Anschläge, die größere axiale Bewegung der Stäbe verhindern. Daher tragen die Verschlußkappen der Brennstäbe keine Gewinde, mit denen sie an den Platten verschraubt sind.

Vielmehr stehen die Brennstäbe mit ihren unteren Verschlußkappen auf der Bodenplatte auf und sind auch mit den oberen Verschlußkappen nur lose in entsprechenden Aufnahmepositionen an der Deckplatte geführt.

Das Brennelement enthält also im wesentlichen einen ein Bündel zueinander paralleler Brennstäbe seitlich umgebenden, oben und unten offenen Brennelement-Kasten, einer mit Kühlmittelauslässen versehenen Deckplatte zum Abdecken des oberen Randes des Brennelement-Kastens und einem Fußteil, das zunächst weiter betrachtet wird. Dieses Fußteil enthält ein Übergangsstück, das mit seinem oberen Rand in das offene untere Ende des Brennelementkastens eingesetzt ist, wobei an diesem oberen Rand des Übergangsstücks eine Bodenplatte angesetzt ist, die den Querschnitt des offenen unteren Endes des Brennelementkastens (und damit das obere Ende des Übergangsstücks) abdeckt und Kühlmittel-Einlässe enthält.

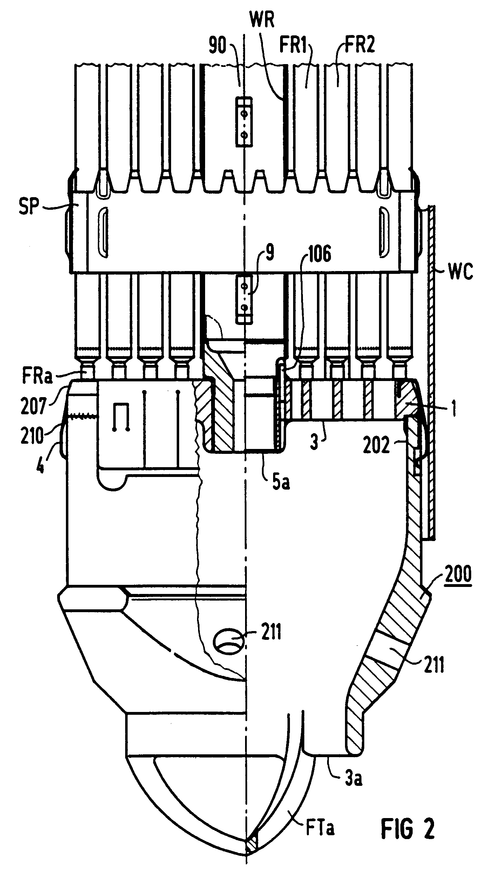

Figur 2 zeigt einen Strömungskanal, der von der Eintrittsöffnung 3a bei den Bügeln FTa zu den Kühlmitteleinlässen 3 in der Bodenplatte 1 und zur unteren Öffnung 5a des Wasserrohres WR führt. Er ist seitlich umgeben vom Übergangsstück 200, dessen oberer Rand 202 in das offene untere Ende des Brennelementkastens WC von unten eingesetzt ist. Die Bodenplatte 1, die die Kühlmittel-Einlässe 3 trägt, ist an den oberen Rand 202 des Übergangsstücks angesetzt und deckt die untere Öffnung des Brennelementkastens ab. Dabei entsteht eine Kante 207, die an der Innenseite des unteren offenen Endes des Brennelementkastens entlang läuft.

Eine langgestreckte Dichtfeder 4 erstreckt sich ungefähr parallel zur Kante und besitzt eine Wölbung, die um die Kante 207 herumgebogen, auf den Brennelementkasten gerichtet und dort abgestützt ist. Derartige Dichtfedern dienen zur Stabilisierung der Strömung durch das Brennelement und verhindern weitgehend, daß sich der im Brennelement aufbauende Überdruck über einen Bypass zwischen Fußteil und Kasten ausgleichen kann. Auch mehrere seitlich durch das Übergangsstück herausführende Öffnungen 211 dienen der Strömungsstabilisierung.

Im Stand der Technik weisen die Brennstäbe FR untere Endkappen FRa auf, die in entsprechende Bohrungen der Bodenplatte eingreifen und dort teilweise verschraubt sind. Die Dichtfedern 4 tragen dabei an einem um die Kante 207 gebogenen Seitenteil entsprechende Öffnungen, durch die diese unteren Endkappen der Brennstäbe greifen, um die Feder an der Bodenplatte festzuhalten. Nach Entfernen der Brennstäbe verlieren diese Federn ihren Halt und können abfallen. Sind die Endkappen FRa der Brennstäbe nicht in entsprechenden Öffnungen der Bodenplatte gehalten (z.B. weil sie auch im fertig montierten Zustand bereits oberhalb der Bodenplatte enden), so sind derartige Federkonstruktionen nicht verwendbar.

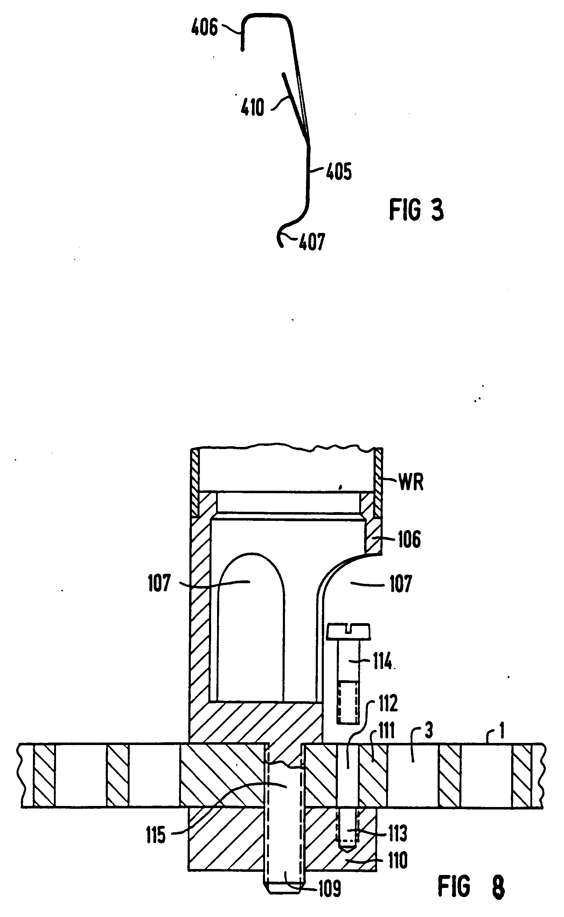

Daher ist eine Dichtfeder vorgesehen, deren Prinzip in Figur 3 dargestellt ist und die an das Fußteil angeklippt ist. Diese Dichtfeder ist in der zu dieser Erfindung gehörenden Offenlegungsschrift PCT/DE 91/00734 beschrieben, deren Inhalt der Beschreibung dieser Erfindung zuzurechnen ist.

Die erfindungsgemäße Befestigung von Brennstäben ist auch für Druckwasserreaktoren oder Siedewasser-Brennelemente ohne Wasserrohre geeignet. Sie wird im folgenden aber beschrieben für ein Brennelement eines Siedewasserreaktors, das ein zwischen den Brennstäben des Stabbündels angeordnetes, zu diesen Brennstäben paralleles Kühlmittelrohr mit einem eine Öffnung für das Kühlmittel aufweisenden unteren Enstück besitzt. Dieses Kühlmittelrohr kann als wesentliches tragendes Element des Brennelement-Skelettes benutzt werden, wobei einerseits eine kraftschlüssige, lösbare Verbindung zwischen der Deckplatte und einem oberen Endstück des Kühlmittelrohres und eine sichere, kraftschlüssige Verbindung des unteren Endstückes mit der Bodenplatte vorgesehen ist.

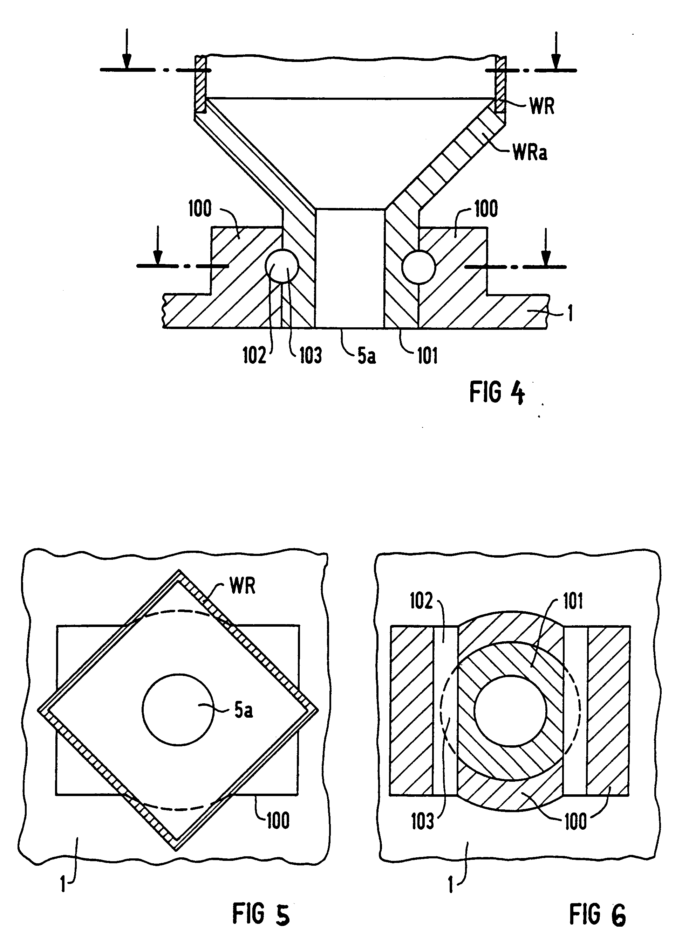

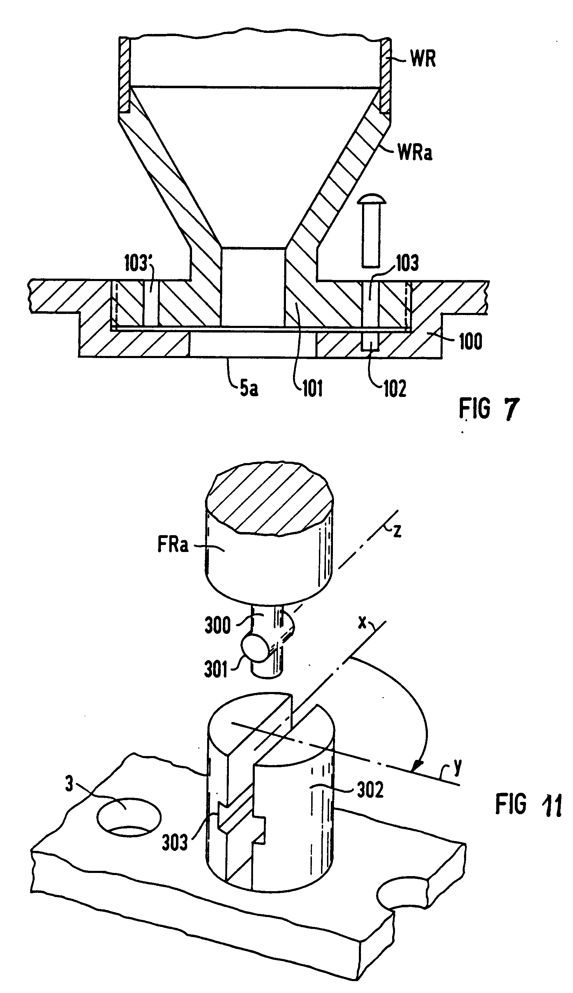

Eine derartige Verbindung zwischen entsprechenden Teilen der Bodenplatte 1 und des unteren Endstücks WRa des Kühlmittelrohres WR zeigen die Figuren 4, 5 und 6, bei dem Enstück und Bodenplatte jeweils mindestens ein Verbindungsteil mit aneinander angepaßten, eine lösbare Verbindung von Endstück und Bodenplatte bildenden Profilen aufweisen. Diese lösbare Verbindung ist durch einen in beide Verbindungsteile eingreifenden Sicherungsbolzen verriegelt. Hierzu dienen entsprechende Aussparungen 102 und 103 in den beiden Verbindungsteilen, in die der Sicherungsbolzen einsetzbar ist. Die beiden Verbindungsteile können dabei ineinandergesteckt (Figur 4) und/oder miteinander verschraubt (Figur 7) sein.

Vorteilhaft ist dabei das Verbindungsteil in eine Bohrung der Bodenplatte eingesetzt und/oder eingeschraubt und die Öffnung des Kühlmittelrohres führt durch das Endstück und die Bohrung hindurch auf die dem Brennstab-Bündel abgewandte Unterseite der Bodenplatte, um eine große Öffnung 5a für den ungehinderten Eintritt des Kühlmittels in das Kühlmittelrohr WR zu ermöglichen.

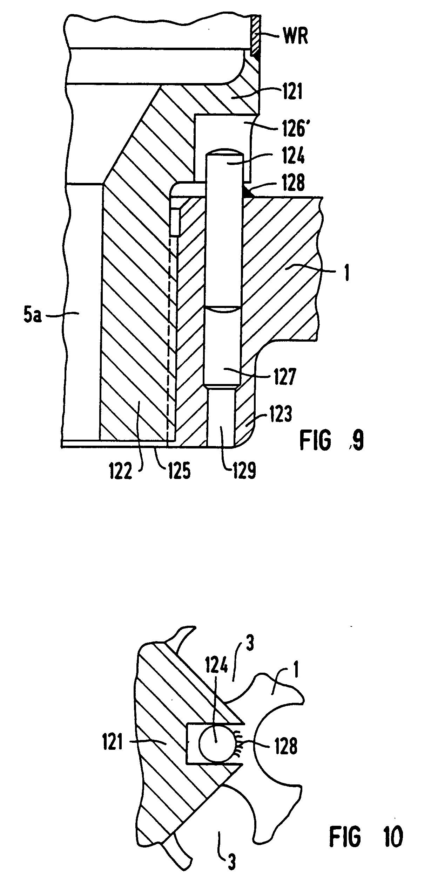

Prinzipiell ist es nicht erforderlich, das Endstück mit seinem Verbindungsteil einstückig auszubilden. Zum Beispiel kann nach Figur 8 das Endstück 106 mit seitlichen Öffnungen 107 versehen sein und einen nach unten vorspringenden Zapfen 109 tragen, der in einer Bohrung 115 in einem Teilstück 111 der Bodenplatte 1 geführt ist und der an seinem unteren Ende ein Gewinde für die Mutter 110 zeigt, wodurch ebenfalls eine kraftschlüssige Verbindung zwischen dem Kühlmittelrohr WR und seinem Endstück einerseits und der Bodenplatte 1 andererseits erreicht wird. Die Mutter 110 und das Teilstück 111 tragen die Aussparungen 112 und 113, die im fertig montierten Zustand einen Aufnahmekanal bilden, in dem der Bolzen 114 eingesetzt werden kann. In diesem Fall ist der Bolzen 114 über ein Gewinde an seinem unteren Ende in der Aussparung 113 der Mutter 110 gehalten.

In den - relativ seltenen - Fällen, in denen die Bodenplatte vom Kühlmittelrohr abgenommen werden muß, stört auch ein Festsitzen der Schraubverbindungen nicht sehr, da die kraftschlüssige Verbindung durch Aufbohren der Mutter gelöst werden kann. Für eine erneute Verwendung des Kühlmittelrohres braucht lediglich die Mutter 110 und der Bolzen 114 ersetzt zu werden.

Vorteilhaft sind die benötigten Verbindungsteile jedoch an die Bodenplatte 1 bzw. das Endstück 106 angeformt.

In Figur 9 ist das zwischen den Brennstäben des Stabbündels angeordnete, zu den Stäben ungefähr parallele Kühlmittelrohr WR mit einem unteren Endstück 121 verschweißt, das ein Verbindungsteil in Form eines angeformten, das Kühlmittelrohr durch eine Bohrung in der Bodenplatte verlängernden Rohrstückes 122 trägt. Auch der Bodenplatte ist ein Verbindungsstück zugeordnet, nämlich das angeformte Teilstück 123, das die Bohrung 125 trägt. Die beiden Verbindungsteile 122 und 123 weisen ein Profil auf, das eine lösbare Verbindung von Endstück und Bodenplatte bildet und in diesem Fall als Gewinde ausgeführt ist. Diese lösbare Verbindung ist durch einen Sicherungsbolzen 124 verriegelt.

Dieser Sicherungsbolzen 124 ist zunächst lösbar in entsprechende Aussparungen 126, 127 der beiden Verriegelungsstücke 122 und 123 eingesetzt. Nach dem Einsetzen ist der Bolzen an wenigstens einen der Verbindungsteile fixiert, wie der Schweißpunkt 128 andeutet.

Dadurch wird eine besonders vorteilhafte, drehsichere Befestigung erreicht, die leicht montierbar und demontierbar ist. So kann zum Montieren die Bodenplatte 1 soweit auf das untere Endstück 121 aufgeschraubt werden, bis ein vorgegebener Abstand von einem oberen Endstück des Kühlmittelrohres ungefähr erreicht ist. Anschließend werden diese beiden Teile noch so weit gedreht, bis die Aussparungen 126 und 127 (bzw. die Aussparung 102 und eine der Aussparungen 103 und 103′ der Fig. 7) einen Aufnahmekanal für den Sicherungsbolzen bilden, in dem dieser einsetzbar ist. Dabei kann vorteilhaft der Bolzen bereits vor dem Verriegeln der lösbaren Verbindung in nur einer der beiden Aussparungen gehalten sein, also z.B. ganz in der Aussparung 127 sitzen. Zum Verriegeln wird er dann teilweise in die andere Aussparung hineingeschoben, wozu in Figur 9 ein zum Kühlmittelrohr ungefähr paralleler, in die Aussparung 127 mündender Stichkanal 129 vorgesehen ist, durch den ein Werkzeug zum Anheben des Sicherungsbolzens eingeführt werden kann.

Zum Demontieren braucht dann nur der aus der Aussparung 127 herausragende Teil des Sicherungsbolzen mit dem Schweißpunkt 128 abgeschnitten zu werden.

Nach dem gleichen Prinzip können auch die Endstücke anderer Stäbe des Stabbündels eines Brennelementes, also z.B. die unteren Verschlußkappen von Brennstäben an der Bodenplatte befestigt werden. Auch Druckwasserreaktoren, deren Stabbündel neben zueinander parallelen Brennstäben auch Führungsrohre mit unteren Endstücken enthalten, weisen eine das Bündel nach oben abdeckende Deckplatte mit Kühlmittelauslässen und eine das Bündel nach unten abdeckende Bodenplatte mit Kühlmitteleinlässen auf. Auch hier können die Endstücke eines derartigen Stabes, also die Enden eines Führungsrohres und/oder die unteren Verschlußkappen von Brennstäben auf ähnliche Weise an der Bodenplatte befestigt werden.

Für eine derartige Befestigung weist also die Bodenplatte und wenigstens das Endstück eines Stabes jeweils ein Verbindungsteil auf, wobei diese Verbindungsteile aneinander angepaßte, eine lösbare Verbindung bildende Profile besitzen. Das Endstück wird von oben in die Verbindung eingesetzt und/ oder eingedreht und ein Bolzen verhindert, daß der Stab mit seinem Endstück von der Bodenplatte abheben kann. Dabei ist vorteilhaft der Bolzen an einem der Verbindungsteile derart angeformt, daß die Verbindungsteile einen Bajonettverschluß bilden.

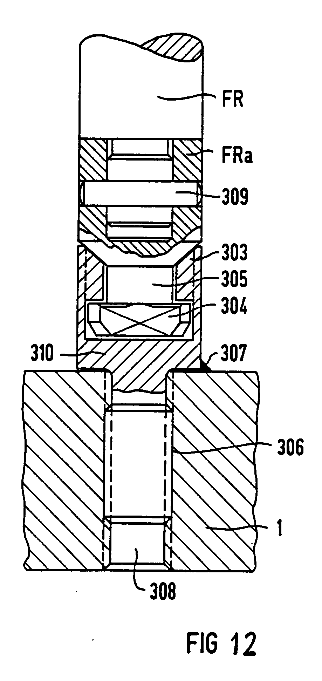

Figur 11 zeigt das Schema eines derartigen Bajonettverschlusses, wobei das Endstück, also z.B. die untere Endkappe FRa eines Brennstabes, ein nach unten vorspringendes, kreuzförmiges Verbindungsteil trägt, das in Richtung der Achse z ausgerichtet ist. In dieser Stellung kann dieses Verbindungsteil in ein entsprechendes, an der Bodenplatte angeformtes Verbindungsteil eingesetzt werden, das einen axialen Schlitz in x-Richtung und eine auf den Innenseiten des Schlitzes laufende Quernut besitzt. Wird nun die z-Achse von der x-Richtung in die y-Richtung gedreht, so kann der Brennstab in dieser Stellung nicht mehr von der Bodenplatte abgehoben werden.

Eine vorteilhafte Ausbildung eines derartigen Bajonettverschlusses zeigt Figur 12 mit einem Sockel, der z.B. mittels eines Stiftes 306 in eine entsprechende Bohrung 308 eingesetzt und z.B. dort eingschraubt ist. Der Sockel 310 kann an der Bodenplatte insbesondere unlösbar befestigt sein, wie durch den Schweißpunkt 307 dargestellt ist. Er bildet das eine der beiden Verbindungsteile.

Gegenüber einem an die Bodenplatte angeformten Verbindungsteil entsteht dadurch die Möglichkeit, die Bodenplatte aus einem Spezialstahl, insbesondere austenitischem Stahl, das Endstück FRa des Brennstabes FR aus Zirkonium oder einer Zirkoniumlegierung und den Sockel aus einem dritten Material zu fertigen, das gegenüber dem Endstück auch nach längeren Standzeiten im Reaktor weniger zu einem Festfressen oder Festbacken des Bajonettverschlusses neigt als ein aus dem Material der Bodenplatte gebildetes Verbindungsteil.

Das eine der beiden Verbindungsteile ist beim Ausführungsbeispiel der Figur 12 ein an der Endkappe nach unten vorspringender Dorn 305, an den der Bolzen als ein seitlicher Ansatz 304 angeformt ist. Das andere Verbindungsstück, nämlich der Sockel 310 weist wenigstens einen Backen 302 auf, der von dem Bolzen untergriffen wird, sobald das Endstück mit seinem Verbindungsteil 305 in eine entsprechende Öffnung des anderen Verbindungsteils (Sockel 310) eingesetzt und um die Längsachse des Stabes gedreht wird.

Vorteilhaft ist in das Endstück FRa ein Querstift 309 eingesetzt, der als eine Markierung dient, die die Stellung des Endstückes angibt.

Bei dem hier beschriebenen Brennelement eines Siedewasserreaktors sind Bodenplatte und Deckplatte am zentralen Kühlmittelrohr gehalten, ihr gegenseitiger Abstand also festgelegt. Am Kühlmittelrohr sind in vorgegebenen axialen Positionen Abstandhalter mit Stegen befestigt, die quer zu den Stäben angeordnet sind und Gittermaschen bilden, durch die die Brennstäbe geführt sind. Die Brennstäbe sind seitlich an den Gittermaschen abgestützt, in axialer Richtung können sie nur bewegt werden, bis sie an der Deckplatte oder Bodenplatte anstoßen. Bei Druckwasserreaktoren sind Bodenplatte, Deckplatte und Abstandhalter an Führungsrohren und Instrumentierungsrohren befestigt. In beiden Fällen kann es aber erwünscht sein, die Brennstäbe, die aus Brennstoff enthaltenden Hüllrohren bestehen, an ihren unteren Enden mit den Verschlußkappen exakt an der Bodenplatte zu positionieren, damit die Brennstoffüllung der Brennstäbe in einer gemeinsamen Ebene beginnt.

Diese Positionierung kann über die beschriebenen Bajonettverbindungen erreicht werden, wobei natürlich der den seitlichen Bolzen tragende Dorn auch vom der Bodenplatte zugeordneten Verbindungsteil und die entsprechenden Backen bzw. das entsprechende, hülsenförmige Gegenstück von der unteren Verschlußkappe des jeweiligen Brennstabs gebildet sein kann. Dabei kann der Bolzen statt am Dorn auch seitlich an der Innenfläche des hülsenartigen Gegenstücks angeformt sein.

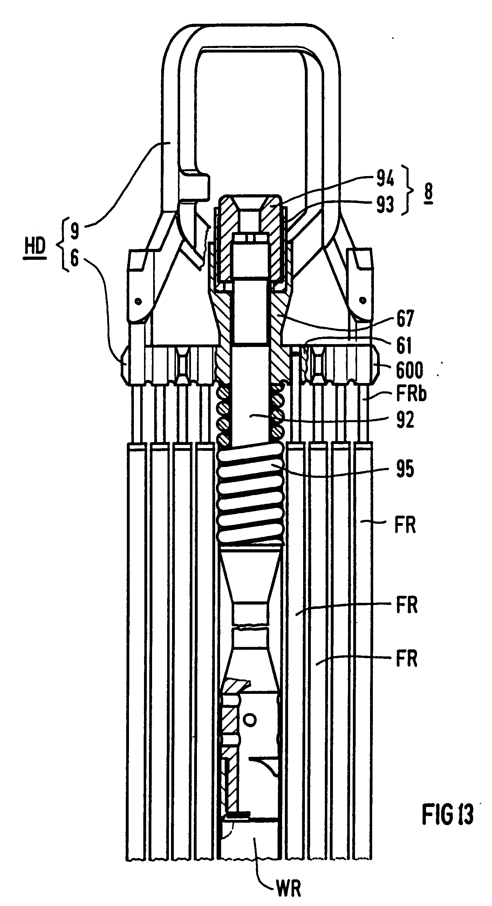

Figur 13 zeigt das obere Ende des Brennelementes mit einer Gruppe von Brennstäben FR, die auch an ihrem oberen Ende durch Verschlußkappen FRb abgeschlossen sind, die alle gewindelos ausgeführt sind und daher nur lose in Manschetten 61 an der Deckplatte 6 geführt sind. An der Deckplatte 6 ist der Griff 9 angeformt oder aufgesteckt, wobei ein zentrales Teil, z.B. in Form eines angeformten Kragens 67, vorgesehen ist, in den das Außengewinde 93 einer unverlierbar am oberen Ende des Kühlmittelrohres WR gehaltenen Zentralmutter 94 eingeschraubt ist. Über diese Zentralmutter 94, die damit das in Figur 1 gezeigte Verbindungsteil 8 darstellt, kann also das Brennelementskelett (insbesondere Deckplatte, Kühlmittelrohr, Abstandhalter und Bodenplatte) am Griff gehalten und angehoben werden, um z.B. das Brennelement in den Brennelementkasten einzuschieben und in den Reaktorkern einzusetzen. Hierzu ist das obere Endstück des Kühlmittelrohres WR als Steckbolzen 92 ausgebildet, der eine auf Druck beanspruchte Feder 95 trägt, um einen ausreichenden Spielraum für eine betriebsbedingte Längenänderung des Kühlmittelrohres zu ermöglichen.

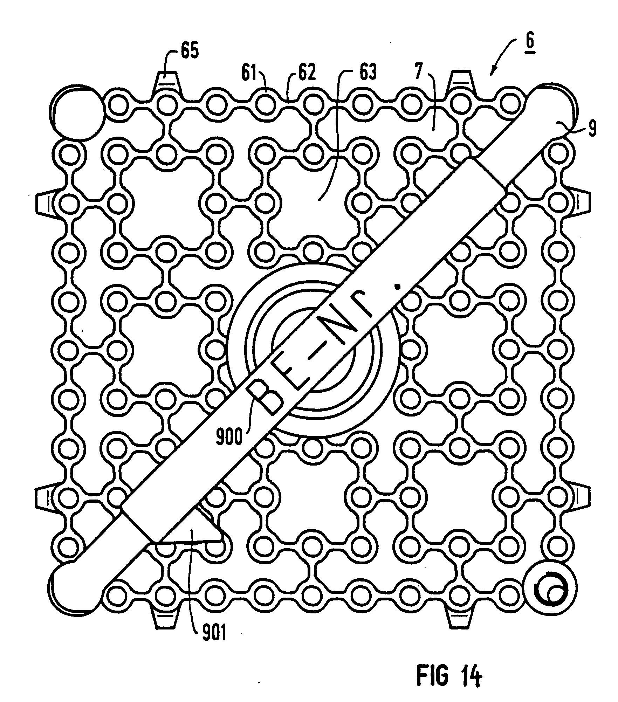

Figur 14 zeigt in der Aufsicht auf den Brennelementkopf, daß die Manschetten 61 über Verbindungsstege 62 miteinander verbunden sind und die Deckplatte bilden, die über seitliche Anlagewarzen 65 an der Innenseite des Brennelementkastens anliegt. Der Griff 9 trägt eine Markierung 900 zur Identifizierung des jeweiligen Brennelementes, während bei Brennelementen, die durch unterschiedliche Füllungen ihrer Brennstäbe unsymmetrisch aufgebaut sind, eine zweite Markierung 901 die Orientierung der eingesetzten Brennstäbe kennzeichnet.

Die Zwischenräume zwischen den Stegen und Manschetten dieser Deckplatte dienen als Auslaßöffnungen für das Kühlmittel, wobei aber an manchen Brennstab-Positionen die entsprechenden Manschetten fehlen und dadurch vergrößerte Auslaßöffnungen 63 entstehen.

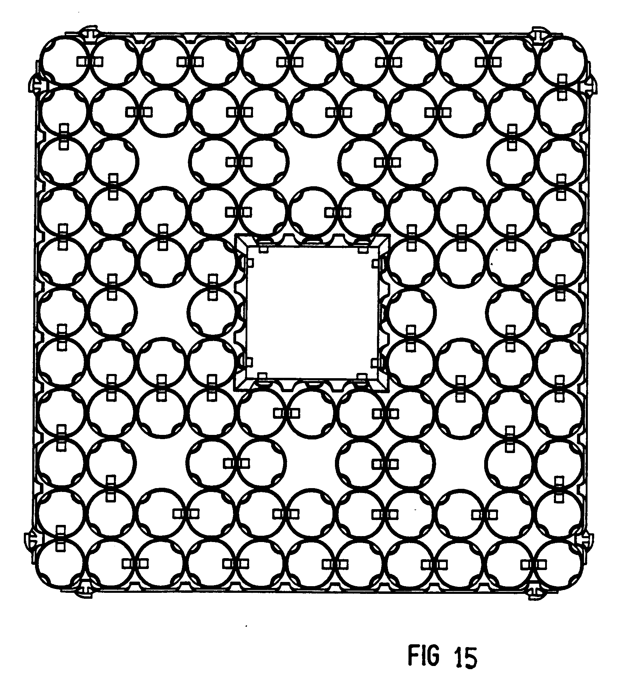

Durch diese vergrößerten Auslaßöffnungen fehlt also für die in diesen Brennstabpositionen sitzenden Brennstäbe der Anschlag für die axiale Bewegung der Brennstäbe. Die Gruppe der in diesen Positionen sitzenden Brennstäbe ist auf die in den Figuren 11 bis 13 gezeigte Weise an der Bodenplatte lösbar befestigt. Sie sind kürzer als die anderen Brennstäbe und enden bereits unterhalb des z.B. in Figur 15 gezeigten obersten Abstandhalters.

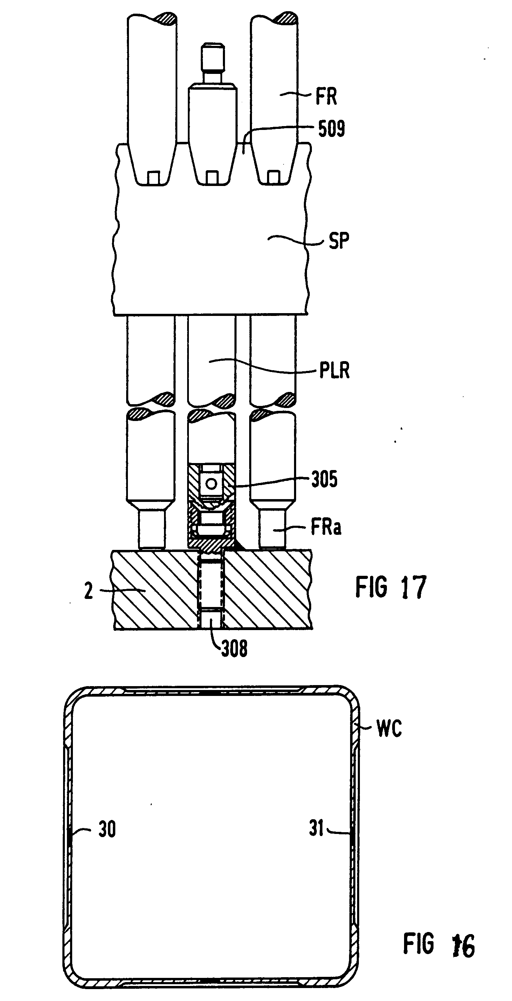

Über schmale Anlagenoppen ist der Abstandhalter an den Innenflächen des in Figur 16 im Querschnitt gezeigten Brennelementkastens WC abgestützt.

Dieser Brennelementkasten weist nur an den Ecken und seinem unteren Rand die übliche Dicke auf, die Mittelteile der Seitenwände (und häufig auch der ganze obere Teil des Brennelementkastens) kann zur Verringerung des Materialaufwandes und zur Verbesserung der Querschnittsverhältnisse zwischen Brennstoff, Strukturmaterial und Moderator verringert sein. Dazu kann ein entsprechend gewalztes Blech an seinen Enden über eine Schweißnaht 30 verbunden sein, der zur Erhaltung der Symmetrie weitere Schweißnähte 31 an den anderen Kastenseiten entsprechen können.

Figur 17 zeigt eine Aufsicht auf den beschriebenen Abstandhalter SP, der an seinem oberen Rand Strömungsleitflächen, z.B. nach innen gerichtete Fahnen 509 an den Außenstegen, enthalten kann. Mit FR2 ist dabei einer der Brennstäbe aus der Gruppe der kürzeren Brennstäbe dargestellt, die mit ihren profilierten Verlängerungen 305 in entsprechende Sockel oder Adapter eingreifen, die in Bohrungen 308 der Bodenplatte 2 eingesetzt sind. Die langen Brennstäbe FR1 dagegen stehen vorteilhaft mit ihren unteren Endkappen FRa stumpf auf der Bodenplatte 2 auf.

Die Verkürzung der Brennstäbe der zweiten Gruppe schafft die Möglichkeit, in axialer Richtung eine optimale Brennstoffverteilung im Brennelement zu erreichen und gleichzeitig das Verhältnis von Brennstoff zu Moderator (Kühlmittel) den Bedürfnissen der Neutronenökonomie besonders anzupassen.

Eine andere Möglichkeit dieser Anpassung ist gegeben, wenn neben einer Gruppe normaler, praktisch auf der ganzen Länge des Brennelementes mit Brennstoff gefüllter Brennstäbe eine zweite Gruppe von Brennstäben verwendet wird, die jeweils einen mit Brennstoff gefüllten, abgeschlossenen unteren Teil mit entsprechenden, an der Bodenplatte gehaltenen unteren Endkappen aufweisen, wobei sich aber an diesen unteren Teil ein rohrförmiger oberer Teil mit Kühlmittelöffnungen an beiden Enden anschließt. Diese oberen Teile stellen daher zusätzliche Kühlmittelrohre dar und erhöhen das für flüssigen Moderator zur Verfügung stehende Volumen, können andererseits aber ebenfalls in Abstandhaltermaschen gehalten und einer gewünschten Form der Strömungsverteilung angepaßt werden. Dadurch können die Verhältnisse im Brennelement stabilisiert werden.

Die Erfindung schafft so ein Brennelement, das kostengünstig herzustellen, für Reparaturen und Inspektionen leicht zu montieren oder demontieren und gewünschten strömungstechnischen und neutronenökonomischen Verhältnissen angepaßt ist.

## Patentansprüche

1. Brennelement mit
a) einem zueinander parallele Brennstäbe enthaltenden Stabbündel aus Stäben (WR, FR) mit unteren Endstücken (WRa, FRa),
b) einer das Bündel nach oben abdeckenden Deckplatte (6) mit Kühlmittelauslässen (7),
c) einer das Bündel nach unten abdeckenden Bodenplatte (1) mit Kühlmitteleinlässen (3),
**dadurch gekennzeichnet**, daß die Bodenplatte (1) und wenigstens das Endstück (FRa, WRa) eines Stabes jeweils ein Verbindungsteil (100, 101) mit aneinander angepaßten, eine lösbare Verbindung des Endstückes mit der Bodenplatte bildenden Profilen aufweisen, wobei das Endstück von oben in die Verbindung eingesetzt und/oder eingedreht werden kann und ein Bolzen (124) vorgesehen ist, der ein Abheben des Stabes von der Bodenplatte verhindert.

2. Brennelement nach Anspruch 1, **dadurch gekennzeichnet**, daß eines der beiden Verbindungsteile (101) an die Bodenplatte angeformt ist.

3. Brennelement nach Anspruch 1, **dadurch gekennzeichnet**, daß eines der beiden Verbindungsteile ein in die Bodenplatte eingeschraubter Sockel (122) ist.

4. Brennelement nach Anspruch 1, **dadurch gekennzeichnet**, daß eines der beiden Verbindungsteile ein an der Bodenplatte unlösbar befestigter, insbesondere angeschweißter Sockel (303) ist.

5. Vorrichtung nach Anspruch 3 oder 4, **dadurch gekennzeichnet**, daß die Bodenplatte (1) aus Spezialstahl, das Endstück (FRa) aus Zirkonium oder einer Zirkonium-Legierung und der Sockel (303) aus einem dritten Material besteht.

6. Vorrichtung nach einem der Ansprüche 1 bis 5, **dadurch gekennzeichnet**, daß der Bolzen (301) an einem der Verbindungsteile (300) angeformt ist und die Verbindungsteile (300, 302) einen Bajonettverschluß bilden.

7. Brennelement nach Anspruch 6, **dadurch gekennzeichnet**, daß mit dem Bajonettverschluß die unteren Endkappen (FRa) von Brennstäben (FR) an der Bodenplatte (1) gehalten sind.

8. Brennelement nach Anspruch 7, **dadurch gekennzeichnet**, daß eine erste Gruppe von Brennstäben (FR1), die sich praktisch von der Bodenplatte bis zur Deckplatte erstrecken, und eine zweite Gruppe von kürzeren Brennstäben (FR2) vorgesehen ist, und daß die unteren Verschlußkappen der kürzeren Brennstäbe über Bajonettverschlüsse an der Bodenplatte gehalten sind.

9. Brennelement nach einem der Ansprüche 1 bis 8, **dadurch gekennzeichnet**, daß eines der beiden Verbindungsteile einen ungefähr parallel zu den Stäben vorspringenden Dorn (300) trägt, daß das andere Verbindungsteil zwei Backen (302) trägt, zwischen die der Dorn einführbar ist, daß der Bolzen von mindestens einem an den Dorn oder den Backen angeformten seitlichen Ansatz (301) besteht, daß die Profile von dem Ansatz und einer ungefähr zum Dorn senkrechten Nut (303), die nach Einsetzen des Dorns und einer Drehung des Endstücks den Ansatz untergreift, gebildet werden und daß der Dorn (300) oder die Backen unlösbarer Teil des Endstücks (FRa) eines Brennstabes sind.

10. Brennelement nach einem der Ansprüche 7 bis 9, **dadurch gekennzeichnet**, daß die Endkappe eine Markierung (309) trägt, die die Stellung des Endstücks angibt.

11. Brennelement für einen Siedewasserreaktor, mit
a) einem ein Bündel zueinander paralleler Brennstäbe (FR) seitlich umgebenden, oben und unten offenen Brennelementkasten (WC),
b) einer das offene obere Ende des Kastens abdeckenden Deckplatte (6) mit Kühlmittelauslässen (7),
c) einem Fußteil (FT) mit einem oberen Rand, der in das offene untere Ende des Brennelementkastens (WC) eingesetzt ist, und einer an den Rand anschließenden, das offene untere Ende des Brennelementkastens abdeckenden Bodenplatte (1) mit Kühlmitteleinlässen (3), und
d) wenigstens einem zwischen den Brennstäben angeordneten und zu ihnen parallelen Kühlmittelrohr (WR) mit einem eine Öffnung (5a) für Kühlmittel aufweisenden unteren Endstück (WRa),
**dadurch gekennzeichnet**, daß das untere Ende des Kühlmittelrohres (WR) und die Bodenplatte (1) jeweils mindestens ein Verbindungsteil (106, 110) mit aneinander angepaßten, eine lösbare Verbindung von Endstück und Bodenplatte bildenden Profilen aufweisen, und daß die lösbare Verbindung durch einen in beide Verbindungsteile eingreifenden Sicherungsbolzen (114) verriegelt ist.

12. Brennelement nach Anspruch 11, **dadurch gekennzeichnet**, daß die beiden Verbindungsteile (106, 110) ineinander gesteckt und/oder geschraubt sind und jeweils eine Aussparung (112) aufweisen, in die der Sicherungsbolzen (114) zur Verriegelung der Verbindung einsetzbar ist.

13. Brennelement nach Anspruch 12, **dadurch gekennzeichnet**, daß der Bolzen (114) lösbar eingesetzt ist.

14. Brennelement nach Anspruch 13, **dadurch gekennzeichnet**, daß der Bolzen (114) vor dem Verriegeln der lösbaren Verbindung in nur einer der beiden Aussparungen (112) gehalten und zum Verriegeln der lösbaren Verbindung teilweise in die andere Aussparung hinein verschoben ist.

15. Brennelement nach Anspruch 13 oder 14, **dadurch gekennzeichnet**, daß der Bolzen (124) nach dem Einsetzen mit wenigstens einem der Verbindungsteile verschweißt ist.

16. Brennelement nach einem der Ansprüche 12 bis 15, **dadurch gekennzeichnet**, daß das eine Verbindungsteil (101) an das Endstück (WRa) und das andere Verbindungsteil (100) an der Bodenplatte angeformt ist.

17. Brennelement nach Anspruch 16, **dadurch gekennzeichnet**, daß das Endstück (WRa) mit seinem Verbindungsteil (101) in eine Bohrung der Bodenplatte eingesetzt und/ oder eingeschraubt ist und daß die Öffnung (5a) des Kühlmittelrohres durch das Endstück (WRa) und sein Verbindungsteil (101) hindurch auf die dem Brennstabbündel abgewandte Unterseite der Bodenplatte führt.

18. Brennelement nach einem der Ansprüche 12 bis 18, **dadurch gekennzeichnet**, daß das Kühlmittelrohr (WR) ein oberes Endstück (WRb) aufweist, mit dem es an der Deckplatte (6) gehalten ist.

19. Brennelement nach einem der Ansprüche 12 bis 19, **dadurch gekennzeichnet**, daß das Kühlmittelrohr (WR) mit seinem unteren Endstück (WRa) bis auf einen vorgegebenen Abstand von einem oberen Endstück (WRb) des Kühlmittelrohres (WR) in ein Gewinde an der Bodenplatte (1) eingeschraubt und soweit gedreht ist, bis eine Aussparung (103) im Endstück und eine Aussparung (102) an einem an der Bodenplatte unlösbar befestigten Teil einen Aufnahmekanal für den Sicherungsbolzen bilden.

20. Brennelement nach einem der Ansprüche 12 bis 20, **dadurch gekennzeichnet**, daß am Kühlmittelrohr in vorgegebenen axialen Positionen Abstandhalter (SP) mit Gittermaschen bildenden, quer zu den Stäben angeordneten Stegen befestigt sind, daß die Brennstäbe durch die Gittermaschen geführt und seitlich an den Gittermaschen abgestützt sind und daß mindestens eine erste Gruppe von Brennstäben (FR1) aus Brennstoff enthaltenden, an ihren beiden Enden durch gewindelose Verschlußkappen abgeschlossenen Hüllrohren besteht, die in Längsrichtung zwischen Deckplatte und Bodenplatte beweglich sind.

21. Brennelement nach Anspruch 20, **dadurch gekennzeichnet**, daß die unteren Verschlußkappen (FRa) stumpf auf der Bodenplatte aufstehen.

22. Brennelement nach Anspruch 20 oder 21, **dadurch gekennzeichnet**, daß eine zweite Gruppe von Brennstäben jeweils einen mit Brennstoff gefüllten, abgeschlossenen unteren Teil und einen daran anschließenden, rohrförmigen oberen Teil mit Kühlmittelöffnungen an beiden Enden aufweisen.

23. Brennelement nach Anspruch 21 oder 22, **dadurch gekennzeichnet**, daß eine zweite Gruppe von Brennstäben (FR2) kürzer als die Brennstäbe (FR1) der ersten Gruppe sind und untere Endkappen aufweisen, die an der Bodenplatte (1) lösbar befestigt sind.

24. Brennelement nach Anspruch 22 oder 23, **dadurch gekennzeichnet**, daß zwischen Brennstäben (FR2) der zweiten Gruppe und dem Brennelementkasten (WC) mindestens ein Brennstab (FR1) der ersten Gruppe angeordnet ist.

25. Brennelement nach einem der Ansprüche 23 bis 24, **dadurch gekennzeichnet**, daß der Brennelementkasten (WC) einen quadratischen Querschnitt aufweist und in den Diagonalen des Querschnitts mindestens ein Brennstab der zweiten Gruppe (FR2) angeordnet ist.

## Claims

1. Fuel element having:
(a) a rod assembly containing mutually parallel fuel rods and comprised by rods (WR, FR) having lower end pieces (WRa, FRa),
(b) a top plate (6) covering the rod assembly in the upward direction and having coolant outlets (7),
(c) a base plate (1) covering the rod assembly in the downward direction and having coolant inlets (3), characterised in that the base plate (1) and at least the end piece (FRa, WRa) of a fuel rod each have a connecting part (100, 101), these connecting parts having profiles which are adapted to one another and which form a releasable connection of the end piece with the base plate, wherein the end piece can be inserted and/or screwed into the connection from above, and there is provided a bolt (124) which prevents the rod from lifting off the base plate.

2. Fuel element according to claim 1, characterised in that one of the two connecting parts (101) is preformed on the base plate.

3. Fuel element according to claim 1, characterised in that one of the two connecting parts is a base (122) screwed into the base plate.

4. Fuel element according to claim 1, characterised in that one of the two connecting parts is a base (303) non-detachably secured to the base plate, in particular, welded thereon.

5. Apparatus according to claim 3 or 4, characterised in that the base plate (1) consists of special steel, the end piece (FRa) consists of zirconium or a zirconium alloy and the base (303) consists of a third material.

6. Apparatus according to one of claims 1 to 5, characterised in that the bolt (301) is preformed on one of the connecting parts (300) and the connecting parts (300, 302) form a bayonet joint.

7. Fuel element according to claim 6, characterised in that the lower end caps (FRa) of fuel rods (FR) are held on the base plate (1) by means of the bayonet joint.

8. Fuel element according to claim 7, characterised in that a first group of fuel rods (FR1), which extend practically from the base plate to the top plate, and a second group of shorter fuel rods (FR2), are provided, and in that the lower closing caps of the shorter fuel rods are held on the base plate by way of bayonet joints.

9. Fuel element according to one of claims 1 to 8, characterised in that one of the two connecting parts carries a mandrel (300) projecting approximately parallel with the rods, in that the other connecting part carries two jaws (302) between which the mandrel can be inserted, in that the bolt consists of at least one lateral lug (301) preformed on the mandrel or on the jaws, in that the profiles are formed by the lug and by a groove (303) which is approximately vertical relative to the mandrel and which, after insertion of the mandrel and rotation of the end piece, engages underneath the lug, and in that the mandrel (300) or the jaws are a non-detachable part of the end piece (FRa) of a fuel rod.

10. Fuel element according to one of claims 7 to 9, characterised in that the end cap carries a marking (309) which indicates the position of the end piece.

11. Fuel element for a boiling water reactor, having:
(a) a fuel element casing (WC) open in the upward and downward directions, laterally surrounding an assembly of mutually parallel fuel rods (FR),
(b) a top plate (6) which covers the open upper end of the casing and which has coolant outlets (7),
(c) a foot part (FT) having an upper edge which is inserted in the open lower end of the fuel element casing (WC), and a base plate (1) which is connected to the edge and which covers the open lower end of the fuel element casing and which has coolant inlets (3), and
(d) at least one coolant pipe (WR) arranged between the fuel rods and parallel thereto and having a lower end piece (WRa) which has an opening (5a) for coolant,
characterised in that the lower end of the coolant pipe (WR) and the base plate (1) each have at least one connecting part (106, 110), which connecting parts have profiles adapted to one another, forming a detachable connection of the end piece and the base plate, and in that the detectable connection is locked by means of a securing bolt (114) engaging in the two connecting parts.

12. Fuel element according to claim 11, characterised in that the two connecting parts (106, 110) are fitted and/or screwed into each other and have a respective recess (112) in which the securing bolt (114) can be inserted for locking the connection.

13. Fuel element according to claim 12, characterised in that the bolt (114) is inserted in a detachable manner.

14. Fuel element according to claim 13, characterised in that the bolt (114) is held, before locking of the detachable connection, in only one of the two recess (112) and is pushed partially into the other recess for locking the detachable connection.

15. Fuel element according to claim 13 or 14, characterised in that the bolt (124) is bonded to at least one of the connecting parts after insertion.

16. Fuel element according to one of claims 12 to 15, characterised in that one connecting part (101) is preformed on the end piece (WRa) and the other connecting part (100) is preformed on the base plate.

17. Fuel element according to claim 16, characterised in that the end piece (WRa) is inserted and/or screwed by its connecting part (101) into a hole in the base plate, and in that the opening (5a) of the coolant pipe leads through the end piece (WRa) and its connecting part (101) on to the underside of the base plate facing away from the fuel rod assembly.

18. Fuel element according to one of claims 12 to 18, characterised in that the coolant pipe (WR) has an upper end piece (WRb) by which it is held on the top plate (6).

19. Fuel element according to one of claims 12 to 19 [sic], characterised in that the coolant pipe (WR) is screwed by its lower end piece (WRa) into a thread on the base plate (1) as far as a pre-selected distance from an upper end piece (WRb) of the coolant pipe (WR) and is rotated until a recess (103) in the end piece and a recess (102) on a part non-detachably secured to the base plate form a receiving channel for the securing bolt.

20. Fuel element according to one of claims 12 to 20, characterised in that spacers (SP) are secured in pre-selected axial positions on the coolant pipe by means of webs forming grid meshes, which webs are arranged transversely relative to the rods, in that the fuel rods are led through the grid meshes and are supported laterally against the grid meshes, and in that at least one first group of fuel rods (FR1) consists of cladding tubes which contain fuel and which are closed off at both ends by threadless closing caps and which can be moved in the longitudinal direction between the top plate and the base plate.

21. Fuel element according to claim 20, characterised in that the lower closing caps (FRa) stand flush on the base plate.

22. Fuel element according to claim 20 or 21, characterised in that a second group of fuel rods have a respective closed-off lower part filled with fuel and a tubular upper part which is connected thereto and which has coolant openings at both ends.

23. Fuel element according to claim 21 or 22, characterised in that a second group of fuel rods (FR2) are shorter than the fuel rods (FR1) of the first group and have lower end caps which can be detachably secured to the base plate (1).

24. Fuel element according to claim 22 or 23, characterised in that at least one fuel rod (FR1) of the first group is arranged between fuel rods (FR2) of the second group and the fuel element casing (WC).

25. Fuel element according to one of claims 23 to 24, characterised in that the fuel element casing (WC) has a square cross-section and at least one fuel rod of the second group (FR2) is arranged in the diagonals of the cross-section.

## Revendications

1. Assemblage combustible comportant
a) un faisceau de crayons (WR,FR) combustibles parallèles qui ont des pièces (WRa, FRa) d'extrémité inférieures,
b) un embout (6) supérieur, qui recouvre le faisceau et qui comporte des orifices (7) de sortie pour un fluide de refroidissement,
c) un embout (7) inférieur, qui recouvre par le bas le faisceau et qui comporte des orifices (3) d'entrée pour le fluide de refroidissement,
caractérisé en ce que l'embout (1) supérieur et au moins la pièce (FRa,WRa) d'extrémité d'un crayon comportent chacun une partie (100,101) de liaison ayant des profils adaptés entre eux et formant une liaison amovible entre la pièce d'extrémité et l'embout inférieur, la pièce d'extrémité pouvant être insérée et/ou tournée à partir du haut dans la liaison, et il est prévu un axe (124), qui empêche le crayon de s'écarter de l'embout inférieur.

2. Assemblage combustible suivant la revendication 1, caractérisé par le fait que l'une des deux parties (101) de liaison est formée par moulage sur l'embout inférieur.

3. Assemblage combustible suivant la revendication 1, caractérisé par le fait que l'une des deux parties de liaison est une embase (122) vissée dans l'embout inférieur.

4. Assemblage combustible suivant la revendication 1, caractérisé par le fait que l'un des deux parties de liaison est une embase (303) fixée de façon inamovible à l'embout inférieur, notamment par vissage.

5. Dispositif suivant la revendication 3 ou 4, caractérisé en ce que l'embout (1) inférieur est en acier spécial, la pièce d'extrémité (FRa) est en zirconium ou en un alliage de zirconium et l'embase (303) est en un troisième matériau.

6. Dispositif combustible suivant l'une des revendications 1 à 5, caractérisé en ce que l'axe (301) vient de moulage avec l'une des parties (300) de liaison et les parties (300,302) de liaison forment un dispositif de fermeture à baïonnette.

7. Assemblage combustible suivant la revendication 6, caractérisé en ce que les bouchons (Fra) inférieurs d'extrémité de crayons de combustibles (FR) sont maintenus à l'embout (1) inférieur au moyen du système de fermeture à baïonnette.

8. Assemblage combustible suivant la revendication 7, caractérisé par le fait qu'il est prévu un premier groupe de crayons (FR1) combustibles, qui s'étend pratiquement de l'embout inférieur à l'embout supérieur, et un second groupe de crayons (FR2) combustibles plus courts, et que les bouchons inférieurs de fermeture des crayons combustibles les plus courts sont maintenus par l'intermédiaire de systèmes de fermeture à baïonnette à l'embout inférieur.

9. Assemblage combustible suivant l'une des revendications 1 à 8, caractérisé par le fait que l'une des deux parties de liaison porte un mandrin (300) qui fait saillie approximativement parallèlement aux crayons, que l'autre partie de liaison porte deux mâchoires (302), entre lesquelles le mandrin peut être introduit, que l'axe est constitué par au moins un appendice (301) saillant latéral, formé sur le mandrin ou sur la mâchoire, que les profils sont formés de l'appendice saillant et d'une rainure (303), approximativement perpendiculaire au mandrin et qui enserre l'appendice, après l'insertion du mandrin et une rotation de la pièce d'extrémité, et que le mandrin (300) ou les mâchoires constituent une partie inamovible de la pièce (FRa) d'extrémité d'un crayon combustible.

10. Assemblage combustible suivant l'une des revendications 7 à 9, caractérisé par le fait que le bouchon d'extrémité porte un repère (309), qui indique la position de la pièce d'extrémité.

11. Assemblage combustible pour un réacteur à eau bouillante, comportant
a) un boîtier canal (WC), qui entoure latéralement un faisceau de crayons (FR) combustibles parallèles et qui est ouvert vers le haut et vers le bas,
b) un embout (6) supérieur qui ferme l'extrémité ouverte supérieure du boîtier canal et qui comporte des orifices (7) de sortie pour le fluide de refroidissement,
c) une partie (FT) formant pied ayant un bord supérieur, qui est inséré dans l'extrémité inférieure ouverte du boîtier canal (WC) de l'assemblage combustible, et un embout (1) inférieur qui se raccorde au bord qui ferme l'extrémité inférieure ouverte du boîtier canal de l'assemblage combustible et qui comporte des orifices (3) d'entrée pour le fluide de refroidissement, et
d) au moins un conduit (WR) pour le fluide de refroidissement, qui est disposé entre les crayons combustibles et qui leurs est parallèle et qui comporte une pièce (WRa) d'extrémité inférieure ayant une ouverture (5a) pour le fluide de refroidissement,
caractérisé par le fait que l'extrémité inférieure du conduit (WR) du fluide de refroidissement et l'embout inférieur comportent chacun au moins une partie (106, 110) de liaison, ces parties ayant des profils adaptés entre eux et formant une liaison amovible entre la pièce d'extrémité et l'embout inférieur, et que la liaison amovible est verrouillée par un boulon (114) de sécurité qui pénètre dans les deux parties de liaison.

12. Assemblage combustible suivant la revendication 11, caractérisé par le fait que les deux parties de liaison (106,110) sont emmanchées et/ou vissées l'une dans l'autre et ont chacune un évidement (112), dans lequel peut être inséré le boulon (114) de sécurité servant à verrouiller la liaison.

13. Assemblage combustible suivant la revendication 12, caractérisé par le fait que le boulon (114) est inséré de façon amovible.

14. Assemblage combustible suivant la revendication 13, caractérisé par le fait que le boulon (114) est retenu, avant le verrouillage de la liaison amovible, dans seulement l'un des deux évidements (112), et est introduit partiellement dans l'autre évidement pour le verrouillage de la liaison amovible.

15. Assemblage combustible suivant la revendication 13 ou 14, caractérisé par le fait qu'après l'insertion, l'axe (124) est soudé à au moins l'un des parties de liaison.

16. Assemblage combustible suivant l'une des revendications 12 à 15, caractérisé par le fait qu'une partie (101) de liaison vient de moulage avec la pièce d'extrémité (WRa) et que l'autre partie (100) de liaison vient de moulage avec l'embout inférieur.

17. Assemblage combustible suivant la revendication 16, caractérisé par le fait que la pièce (WRa) d'extrémité est insérée et/ou vissée par sa partie (101) de liaison dans un perçage de l'embout inférieur et que l'ouverture (5a) du conduit pour le fluide de refroidissement mène, par la pièce d'extrémité (WRa) et sa partie (101) de liaison, à la face inférieure de l'embout inférieur, tournée à l'opposé du faisceau de crayons de combustibles.

18. Assemblage combustible suivant l'une des revendications 12 à 18, caractérisé par le fait que le conduit (WR) pour le fluide de refroidissement comprend une pièce (WRb) d'extrémité supérieure, par laquelle elle est maintenue à l'embout (6) supérieur.

19. Assemblage combustible suivant l'une des revendications 12 à 19, caractérisé par le fait que le conduit (WR) pour le fluide de refroidissement est vissé dans un taraudage aménagé dans l'embout (1) inférieur, par sa pièce (WRC) d'extrémité inférieure, jusqu'à une distance prédéterminée d'une pièce (WRb) d'extrémité supérieure du conduit (WR) pour le fluide de refroidissement, et est tourné jusqu'à ce qu'un évidement (103) situé dans la pièce d'extrémité et un évidement (102) situé sur une partie, fixée de façon inamovible à l'embout inférieur, forment un canal de réception du boulon de sécurité.

20. Assemblage combustible suivant l'une des revendications 12 à 20, caractérisé par le fait que des entretoises (SP) comportant des parties pleines formant des mailles d'une grille et disposées transversalement aux crayons sont fixées sur le conduit pour le fluide de refroidissement, dans des positions axiales prédéterminées, que les crayons combustibles sont guidées dans les mailles de la grille et sont soutenues latéralement par ces mailles et qu'au moins un premier groupe de crayons (FR1) combustibles est constitué par des conduits de gainage contenant du matériau combustible et fermés à leurs deux extrémités par des bouchons de fermeture non filetés, qui sont mobiles dans la direction longitudinale entre l'embout supérieur et l'embout inférieur.

21. Assemblage combustible suivant la revendication 20, caractérisé par le fait que les bouchons (FRa) inférieurs de fermeture font saillie sous formes de pointe de l'embout inférieur.

22. Assemblage combustible suivant la revendication 20 ou 21, caractérisé par le fait qu'un second groupe de crayons combustibles comportent une partie inférieure fermée, qui est emplie de combustible, et une partie supérieure de forme tubulaire, qui se raccorde à la précédente et qui comporte des ouvertures pour le passage du fluide de refroidissement à ses deux extrémités.

23. Assemblage combustible suivant la revendication 21 ou 22, caractérisé par le fait qu'un second groupe de crayons (FR2) combustible sont plus courts que les crayons (FR1) combustibles du premier groupe et comportent des bouchons inférieurs d'extrémité, qui sont fixés de façon amovible à l'embout (1) inférieur.

24. Assemblage combustible suivant la revendication 22 ou 23, caractérisé par le fait qu'au moins un crayon (FR1) combustible du premier groupe est disposée entre les crayons (FR2) combustibles du second groupe et le boîtier canal (WC) de l'assemblage combustible.

25. Assemblage combustible suivant l'une des revendications 23 ou 24, caractérisé par le fait que le boîtier canal (WC) de l'assemblage combustible comprend une section transversale carrée et qu'au moins un crayon combustible du second groupe (FR2) est disposé suivant les diagonales de la section transversale.
